# EUROPÄISCHE PATENTSCHRIFT

(11) **EP 3 439 915 B1**
(45) Veröffentlichungstag und Bekanntmachung des Hinweises auf die Patenterteilung: **17.12.2025**
(21) Anmeldenummer: 17712463.3
(22) Anmeldetag: 21.03.2017
(51) Int. Cl.: B60Q 1/00, B60Q 1/14, H05B 45/52, H05B 47/18

(54) **FAHRZEUGSCHEINWERFERSYSTEM**
VEHICLE HEADLIGHT SYSTEM
SYSTÈME DE PROJECTEUR DE VÉHICULE

(30) Priorität: 06.04.2016 DE 102016205683
(43) Veröffentlichungstag der Anmeldung: 13.02.2019
(73) Patentinhaber: Bayerische Motoren Werke Aktiengesellschaft, 80809 München (DE)
(72) Erfinder: RACK, Viktor, 85276 Pfaffenhofen a. d. Ilm (DE); TRUMPP, Thomas, 80807 München (DE); WERKSTETTER, Mario, 80995 München (DE)
(86) Internationale Anmeldenummer: PCT/EP2017/056604
(87) Internationale Veröffentlichungsnummer: WO 2017/174340

(56) Entgegenhaltungen:
- EP-A1- 1 748 360
- EP-A1- 2 086 084
- EP-A2- 0 870 644
- CN-A- 103 713 932
- DE-A1- 10 037 131
- DE-A1- 102006 021 694
- US-A1- 2005 111 231
- RALF SCHADE: "Update-Programmierung von Kraftfahrzeugen �ber heterogene Kommunikationsnetzwerke", 1 January 2006 (2006-01-01), XP055315019, Retrieved from the Internet <URL:http://digisrv-1.biblio.etc.tu-bs.de:8080/docportal/servlets/MCRFileNodeServlet/DocPortal_derivate_00003389/Dissertation_RalfSchade_final.pdf> [retrieved on 20161031]
- VIJAIYA PRATHAP ET AL: "Penetration Testing of Vehicle ECUs Master of Science Thesis in the program networks and Distributed systems", 1 January 2013 (2013-01-01), XP055639294, Retrieved from the Internet <URL:http://publications.lib.chalmers.se/records/fulltext/184988/184988.pdf> [retrieved on 20191105]

## Beschreibung

Die Erfindung betrifft eine Beleuchtungseinrichtung eines Fahrzeugs aufweisend eine Mastersteuervorrichtung und mindestens eine Slavesteuervorrichtung, wobei die Slavesteuervorrichtung über ein Bus-System mit der Mastersteuervorrichtung verbunden ist.

Moderne Fahrzeuge weisen häufig komplexe Fahrzeugscheinwerfer mit integrierten Steuergeräten auf. Da die Steuergeräte fest in dem Fahrzeugscheinwerfer verbaut sind, ist es selbst bei einem reinen Softwarefehler notwendig, den gesamten Fahrzeugscheinwerfer aus dem Fahrzeug auszubauen. Dies ist aufwendig und verursacht hohe Kosten.

DE 10 2006 021 694 A1 betrifft eine Beleuchtungseinrichtung für ein Kraftfahrzeug, umfassend eine Steuerungseinrichtung sowie eine Leuchteinheit bestehend aus mehreren separaten Modulen umfassend jeweils mehrere LEDs. Das Abblendlicht und/oder das Fernlicht erzeugenden Module oder separate, der Erzeugung des Abblendlichts und/oder Fernlichts dienende LEDs eines Moduls sind dabei separat über die Steuerungseinrichtung zur variablen Erzeugung des Abblendlichts und/oder Fernlichts ansteuerbar.

EP 2 086 084 A1 betrifft ein LED-Bordnetz zum Betrieb von Kfz-Leuchten mit Leuchtdioden. Das LED-Bordnetz weist eine LED-Spannungsversorgung, deren Nennspannung von der Nennspannung einer Starterbatterie eines Kraftfahrzeugs verschieden ist, und wenigstens zwei Treibereinrichtungen auf, die über Versorgungsleitungen mit der LED-Spannungsversorgung verbunden und jeweils zum Ansteuern einer eigenen Kfz-Leuchte ausgebildet sind.

US 2005/0111231 A1 betrifft ein Lichtsteuergerät, das die Helligkeit einer Leuchtdiode in linearer Weise verändern kann. Das Lichtsteuergerät kann eine Anzahl von Lichtern in einem vorbestimmten Muster oder in einem vom Benutzer entworfenen Muster steuern. Eine Fernbedienung kann zur Steuerung und Interaktion mit dem Lichtsteuergerät verwendet werden. Das Lichtsteuergerät kann Eingänge für Audiosignale, Tachosignale oder andere externe Signale haben. Das Lichtsteuergerät kann mit anderen Lichtsteuergeräten gekoppelt werden, um die Steuerung zusätzlicher Lichter in einer synchronisierten Weise zu ermöglichen.

Die Aufgabe, die der Erfindung zugrunde liegt, ist eine Beleuchtungseinrichtung eines Fahrzeugs zu schaffen, welches einfach und kostengünstig gewartet werden kann.

Die Aufgabe wird gelöst durch die Merkmale des unabhängigen Patentanspruchs. Vorteilhafte Ausgestaltungen sind in den Unteransprüchen gekennzeichnet.

Die Erfindung zeichnet sich aus durch eine Beleuchtungseinrichtung eines Fahrzeugs aufweisend eine Mastersteuervorrichtung und mindestens eine Slavesteuervorrichtung, wobei die Slavesteuervorrichtung über ein Bus-System mit der Mastersteuervorrichtung verbunden ist. Die Slavesteuervorrichtung ist dazu ausgebildet, eine Applikationssoftware auszuführen zum Ansteuern einer Scheinwerfer-Systemkomponente. Die Mastersteuervorrichtung ist dazu ausgebildet, die Applikationssoftware auf die Slavesteuervorrichtung aufzuspielen.

Das Fahrzeug ist beispielsweise ein PKW oder ein Motorrad. Die Beleuchtungseinrichtung ist beispielsweise eine vordere oder eine hintere Beleuchtungseinrichtung.

Die Mastersteuervorrichtung kann auch als übergeordnete Steuervorrichtung bezeichnet werden. Die Slavesteuervorrichtung kann auch als untergeordnete Steuervorrichtung bezeichnet werden.

Das Ansteuern der Scheinwerfer-Systemkomponente umfasst insbesondere eine Ansteuerung von mindestens einer
Lichtquelle, wie LEDs oder Laserlichtquellen, und/oder ein Auslesen von Sensoren und/oder das Ansteuern von Thermistoren, wie NTCs und/oder eine Ansteuerung von Schwenkeinrichtungen oder anderer Scheinwerfer-Systemkomponenten. Die Applikationssoftware ist somit insbesondere für einen vorgegebenen Betrieb des Scheinwerfers vorgesehen, beispielsweise um einen Fernlichtassistent zu realisieren und/oder ein Kurvenfahrlicht. Die Applikationssoftware der Slavesteuervorrichtung ist insbesondere eine ausstattungsabhängige Applikationssoftware, die somit nicht in jedem Fahrzeug gleich ist.

Das Bus-System ist beispielsweise ein CAN-Bus (Controller Area Network insbesondere gemäß ISO 11898) und/oder ein Flexray-Bus, insbesondere gemäß ISO 17458-1 bis 17458-5 und/oder ein Ethernet-Bus, insbesondere gemäß IEEE-Norm 802.3 und/oder ein anderes automotive-qualifiziertes Bus-System.

Indem die Applikationssoftware von der Mastersteuervorrichtung auf die Slavesteuervorrichtung aufgespielt werden kann, ist es nicht notwendig im Fehlerfall den gesamten Scheinwerfer auszubauen. Es ist häufig ausreichend eine neue Applikationssoftware aufzuspielen. Des Weiteren kann somit die Applikationssoftware auf einfache Weise aktualisiert werden. Somit ist die Wartung des Scheinwerfers einfach, kostengünstig und erspart Zeit.

Gemäß einer optionalen Ausgestaltung ist die Mastersteuervorrichtung dazu ausgebildet, die Slavesteuervorrichtung anzusteuern und/oder zu diagnostizieren.

Gemäß der Erfindung weist die Beleuchtungseinrichtung ein Scheinwerfergehäuse auf, wobei die Slavesteuervorrichtung und die Scheinwerfer-Systemkomponente in dem Scheinwerfergehäuse angeordnet sind und die Mastersteuervorrichtung außerhalb des Scheinwerfergehäuses angeordnet ist.

Durch einen derartigen Aufbau ist es möglich die Slavesteuervorrichtung nahe an den anzusteuernden Lichtquellen anzuordnen, so dass ein unkomplizierter Aufbau möglich ist.

In einer nicht erfindungsgemäßen alternativen Ausgestaltung ist die Mastersteuervorrichtung innerhalb des Scheinwerfergehäuses angeordnet.

Gemäß einer weiteren optionalen Ausgestaltung ist die Slavesteuervorrichtung dazu ausgebildet, eine Applikationssoftware auszuführen zum Ansteuern eines LED-Fahrzeugscheinwerfers.

Gerade moderne LED- Fahrzeugscheinwerfer benötigen häufig eine oder mehrere Slavesteuervorrichtungen.

Gemäß einer weiteren optionalen Ausgestaltung ist die Slavesteuervorrichtung dazu ausgebildet, eine Applikationssoftware auszuführen zum Ansteuern eines Laser-Fahrzeugscheinwerfers.

Ebenso wie LED- Fahrzeugscheinwerfer benötigen Laser-Fahrzeugscheinwerfer häufig eine oder mehrere Slavesteuervorrichtungen.

Gemäß einer weiteren optionalen Ausgestaltung ist die Slavesteuervorrichtung dazu ausgebildet, eine Applikationssoftware auszuführen zum Ansteuern eines Matrix-Fahrzeugscheinwerfers.

Ebenso wie LED- Fahrzeugscheinwerfer oder Laser-Fahrzeugscheinwerfer benötigen Matrix-Fahrzeugscheinwerfer häufig eine oder mehrere Slavesteuervorrichtungen.

Gemäß einer weiteren optionalen Ausgestaltung ist die Slavesteuervorrichtung dazu ausgebildet, eine Applikationssoftware auszuführen zum Ansteuern von beliebigen Scheinwerfer-Systemkomponenten.

Gemäß einer weiteren optionalen Ausgestaltung ist die Mastersteuervorrichtung eine Frontscheinwerfermastersteuervorrichtung oder eine Heckleuchtenmastersteuervorrichtung.

Gerade in dem Frontscheinwerfer sind viele verschiedene Lichtansteuerungen und somit Applikationssoftwares nötig, die somit auch fehleranfälliger sind. Somit ist es gerade im Frontscheinwerfer vorteilhaft, die Beleuchtungseinrichtung vorzusehen. Analoges gilt für den Heckscheinwerfer.

Gemäß einer weiteren optionalen Ausgestaltung ist die Mastersteuervorrichtung dazu ausgebildet, zum Aufspielen der Applikationssoftware auf die Slavesteuervorrichtung einen Flash-Speicher eines BIOS der Slavesteuervorrichtung mit einer Firmware zu überschreiben.

Ein derartiges Überschreiben, das auch als Flashen bezeichnet werden kann, kann insbesondere auch in Echtzeit erfolgen, beispielsweise im Rahmen der AUTOSAR 4 (AUTomotive Open System ARchitecture). Durch ein derartiges Flashen können zusätzliche Kosten erspart werden, da hierfür der Flash-Speicher der Slavesteuervorrichtung nur eine geringe Größe aufweisen muss.

Insbesondere weist die Slavesteuervorrichtung einen hierfür angepassten Bootloader auf, der mit der Mastersteuervorrichtung kommuniziert, so dass die Applikationssoftware aufgespielt werden kann.

Gemäß einer weiteren optionalen Ausgestaltung ist die Mastersteuervorrichtung dazu ausgebildet eine Fehlerdiagnose der Slavesteuervorrichtung auszuführen.

Die Fehlerdiagnose umfasst insbesondere die Möglichkeit zu ermitteln, welche Version der Applikationssoftware aufgespielt ist und/oder das Ermitteln von Fehlerzuständen der Slavesteuervorrichtung. Zusätzlich kann beispielsweise die Mastersteuervorrichtung im Fall, dass sie die Slavesteuervorrichtung nicht diagnostizieren kann (Verbindungs- oder Hardwarefehler), zusätzliche Fehlerspeichereinträge setzen, die ausreichend detailliert Auskunft über den Fehler geben.

Um die Fehlerdiagnose ausführen zu können kann die Slavesteuervorrichtung insbesondere eine eigene Diagnoseadresse besitzen, die dem Gesamtfahrzeug und einem an das Fahrzeug gehängten Tester bekannt ist (öffentlich) oder nur der Mastersteuervorrichtung direkt (privat).

Gemäß einer weiteren optionalen Ausgestaltung weist die Beleuchtungseinrichtung mehrere Slavesteuervorrichtungen auf, wobei die Mastersteuervorrichtung dazu ausgebildet ist die Applikationssoftware parallel auf die Slavesteuervorrichtungen aufzuspielen und/oder die Slavesteuervorrichtungen parallel anzusteuern und/oder parallel zu diagnostizieren.

Hierdurch ist eine besonders schnelle Wartung möglich.

Gemäß einer weiteren optionalen Ausgestaltung ist die Mastersteuervorrichtung dazu ausgebildet mit einer externen Diagnosevorrichtung zu kommunizieren.

Die Diagnosevorrichtung kann auch als Tester bezeichnet werden. Die Diagnosevorrichtung ist insbesondere eine mobile Vorrichtung, die an das Fahrzeug angesteckt werden kann oder drahtlos mit dem Fahrzeug kommuniziert.

Hierdurch ist insbesondere das Aufspielen der Applikationssoftware von außen möglich, sowie das Durchführen der Fehlerdiagnose.

Zusammengefasst weist die Beleuchtungseinrichtung zusätzlich folgende Vorteile auf. Die Kosten der Beleuchtungseinrichtung werden gesenkt. Da die Applikationssoftware in der Slavesteuervorrichtung vorgesehen ist, können Grundfunktionen mittels der Mastersteuervorrichtung realisiert werden. Dies ermöglicht eine kostengünstige Standardvariante für die Basis. Weiterhin ist es möglich alle Ausstattungsanteile in separate Slavesteuervorrichtungen zu partitionieren, die nur bei Auswahl dieser Ausstattung, z.B. Laser-Fahrzeugscheinwerfer, verbaut werden. Damit müssen diese Anteile nicht in der Mastersteuervorrichtung vorgehalten werden, so dass die Mastersteuervorrichtung nicht maximal ausgestattet werden muss, was mit einem hohen Kostenaufwand ohne tatsächlichen Nutzen verbunden wäre. Auf Grund der Bussstruktur gegenüber einer diskreten Ansteuerung werden viele Kupfer-Leitungen eingespart die unter Umständen in der Menge sehr teuer sind. Eine kleinere Anzahl an Kabeln führt dazu, dass kleinere und damit günstige Stecker verwendet werden können.

Weiterhin ergeben sich Vorteile im Gewicht der Beleuchtungseinrichtung. Dadurch dass elektronische Anteile in Abhängigkeit der Ausstattungsvariante partitioniert werden können, bleibt die Mastersteuervorrichtung klein und leicht. Auf Grund der Bussstruktur gegenüber einer diskreten Ansteuerung werden viele Leitungen eingespart die ins Gewicht fallen. Eine kleinere Anzahl an Kabeln führt dazu, dass kleinere und damit leichtere Stecker verwendet werden können.

Weiterhin ergeben sich Vorteile in der Funktion. Die neue Architektur der Beleuchtungseinrichtung ermöglicht, dass zur Mastersteuervorrichtung unterschiedliche Slavesteuervorrichtungen variabel angeschlossen werden können, die unterschiedliche Funktionen bedienen, z.B. Ansteuerung von Laserscheinwerfer oder Matrixscheinwerfer. Da die Slavesteuervorrichtungen an einem Bussystem angeschlossen sind, lassen sich viele dieser Slavesteuervorrichtungen in Abhängigkeit der benötigten Funktionen beliebig kombinieren, ohne dass die gesamte Beleuchtungseinrichtung mit Kabeln überfrachtet wird, die bei einer diskreten Ansteuerung notwendig sein würden. Dadurch dass die Slavesteuervorrichtungen über ein Bussystem an die Mastersteuervorrichtung angebunden sind, können diese beliebig über Software konfiguriert und Funktionen mittels Software erweitert oder korrigiert werden ohne eine neue Hardware einzusetzen.

Ausführungsbeispiele der Erfindung sind im Folgenden anhand der schematischen Zeichnungen näher erläutert. Es zeigen:
- Figur 1: eine Beleuchtungseinrichtung eines Fahrzeugs,
- Figur 2: eine Slavesteuervorrichtung,
- Figur 3: eine weitere Slavesteuervorrichtung und
- Figur 4: eine weitere Slavesteuervorrichtung.

Elemente gleicher Konstruktion oder Funktion sind figurenübergreifend mit den gleichen Bezugszeichen gekennzeichnet.

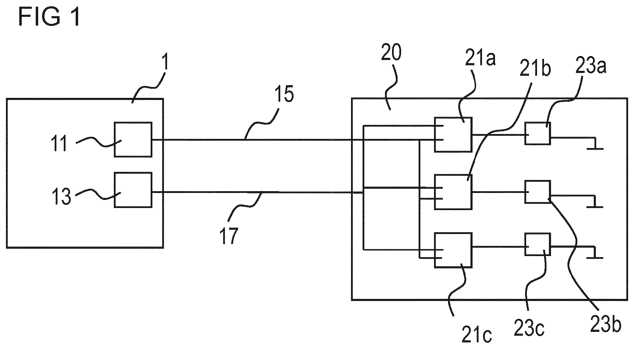

Die Figur 1 zeigt eine Beleuchtungseinrichtung eines Fahrzeugs.

Die Beleuchtungseinrichtung weist eine Mastersteuervorrichtung 1 auf. Die Beleuchtungseinrichtung weist des Weiteren mindestens eine weitere Slavesteuervorrichtung 21a, 21b, 21c auf.

Die Slavesteuervorrichtung 21a, 21b, 21c ist über ein Bus-System 15 mit der Mastersteuervorrichtung 1 verbunden.

Weiterhin ist die Mastersteuervorrichtung 1 mittels einer Versorgungsschnittstelle 13 mit der Slavesteuervorrichtung 21a, 21b, 21c verbunden, mittels der sie die Slavesteuervorrichtung 21a, 21b, 21c schaltbar mit Strom/Spannung versorgen kann.

Die Mastersteuervorrichtung 1 ist dazu ausgebildet, eine Applikationssoftware auf die Slavesteuervorrichtung 21a, 21b, 21c aufzuspielen. Die Mastersteuervorrichtung 1 weist hierfür insbesondere eine Recheneinheit (nicht gezeigt), einen Programm- und Datenspeicher (nicht gezeigt), sowie beispielsweise eine oder mehrere Kommunikationsschnittstellen 11 auf. Der Programm- und Datenspeicher und/oder die Recheneinheit und/oder die Kommunikationsschnittstellen 11 können in einer Baueinheit und/oder verteilt auf mehrere Baueinheiten ausgebildet sein.

Die Mastersteuervorrichtung 1 ist beispielsweise dazu ausgebildet, zum Aufspielen der Applikationssoftware auf die Slavesteuervorrichtung 21a, 21b, 21c einen Flash-Speicher eines BIOS der Slavesteuervorrichtung 21a, 21b, 21c mit einer Firmware zu überschreiben.

Die Mastersteuervorrichtung 1 ist beispielsweise eine Frontscheinwerfermastersteuervorrichtung.

Alternativ oder zusätzlich ist die Mastersteuervorrichtung 1 optional dazu ausgebildet, eine Ansteuerung der Slavesteuervorrichtung 21a, 21b, 21c vorzunehmen.

Alternativ oder zusätzlich ist die Mastersteuervorrichtung 1 optional dazu ausgebildet, eine Fehlerdiagnose der Slavesteuervorrichtung 21a, 21b, 21c auszuführen.

Insbesondere hierfür ist die Mastersteuervorrichtung 1 dazu ausgebildet mit einer externen Diagnosevorrichtung zu kommunizieren, beispielsweise über die Kommunikationsschnittstelle 11 und/oder mittels des Bus-Systems 15 oder einer weiteren Kommunikationsschnittstelle und/oder mittels eines weiteren Bus-Systems.

Die Slavesteuervorrichtung 21a, 21b, 21c ist dazu ausgebildet, die Applikationssoftware auszuführen zum Ansteuern einer Scheinwerfer-Systemkomponente 23a, 23b, 23c. Die Slavesteuervorrichtung 21a, 21b, 21c und die Scheinwerfer-Systemkomponente23a, 23b, 23c sind erfindungsgemäß in einem Scheinwerfergehäuse 20 angeordnet. Die Mastersteuervorrichtung 1 ist außerhalb des Scheinwerfergehäuses 20 angeordnet.

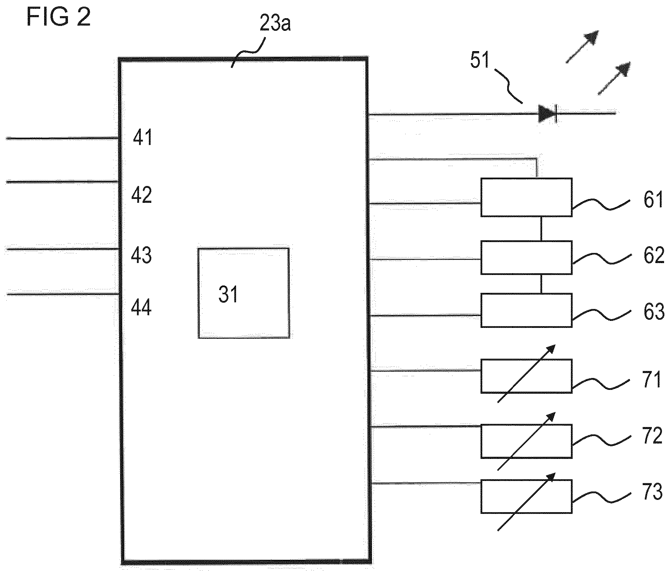

Die Figur 2 zeigt eine Ausführungsform der

Slavesteuervorrichtung 21a, die dazu ausgebildet ist, eine Applikationssoftware auszuführen zum Ansteuern eines Laser-Fahrzeugscheinwerfers.

Die Slavesteuervorrichtung 21a der Figur 2 weist insbesondere eine Recheneinheit 31, einen Programm- und Datenspeicher (nicht gezeigt), sowie beispielsweise eine oder mehrere Schnittstellen auf. Der Programm- und Datenspeicher und/oder die Recheneinheit 31 und/oder die Schnittstellen können in einer Baueinheit und/oder verteilt auf mehrere Baueinheiten ausgebildet sein.

Die Schnittstellen umfassen beispielsweise Versorgungsanschlüsse 41, 42 zur Spannungsversorgung der Slavesteuervorrichtung 21a.

Die Schnittstellen umfassen beispielsweise des Weiteren einen oder mehrere Busanschlüsse 43, 44 zur Kommunikation mit der Mastersteuervorrichtung 1.

Die Schnittstellen umfassen beispielsweise einen Anschluss zur Ansteuerung einer Laserlichtquelle 51. Alternativ können auch mehrere Laserlichtquellen 51 vorgesehen sein.

Die Schnittstellen umfassen beispielsweise des Weiteren einen oder mehrere Sensoranschlüsse zur Kommunikation mit Sensoren 61, 62, 63.

Die Schnittstellen umfassen beispielsweise einen oder mehrere Anschlüsse von Thermistoren 71, 72, 73.

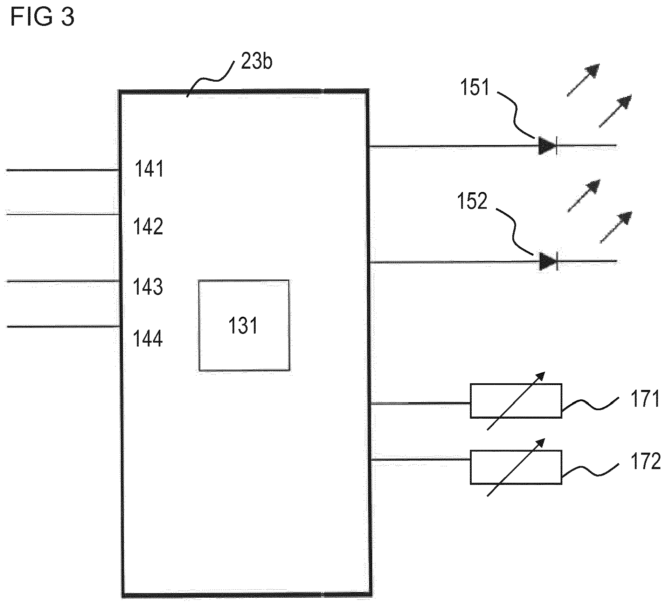

Die Figur 3 zeigt eine Ausführungsform der Slavesteuervorrichtung 21b, die dazu ausgebildet ist, eine Applikationssoftware auszuführen zum Ansteuern eines LED-Fahrzeugscheinwerfers.

Die Slavesteuervorrichtung 21b der Figur 3 weist insbesondere eine Recheneinheit 131, einen Programm- und Datenspeicher (nicht gezeigt), sowie beispielsweise eine oder mehrere Schnittstellen auf. Der Programm- und Datenspeicher und/oder die Recheneinheit 131 und/oder die Schnittstellen können in einer Baueinheit und/oder verteilt auf mehrere Baueinheiten ausgebildet sein.

Die Schnittstellen umfassen beispielsweise Versorgungsanschlüsse 141, 142 zur Spannungsversorgung der Slavesteuervorrichtung 21b.

Die Schnittstellen umfassen beispielsweise des Weiteren einen oder mehrere Busanschlüsse 143, 144 zur Kommunikation mit der Mastersteuervorrichtung 1.

Die Schnittstellen umfassen beispielsweise mehrere Anschlüsse zur Ansteuerung mehrerer LED-Lichtquellen 151, 152.

Die Schnittstellen umfassen beispielsweise einen oder mehrere Anschlüsse von Thermistoren 171, 172.

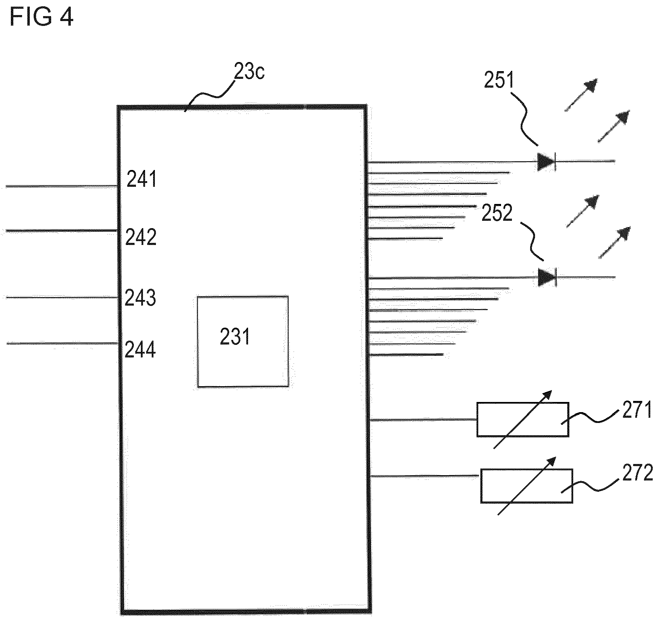

Die Figur 4 zeigt eine Ausführungsform der Slavesteuervorrichtung 21c, die dazu ausgebildet ist, eine Applikationssoftware auszuführen zum Ansteuern eines Matrix-Fahrzeugscheinwerfers.

Die Slavesteuervorrichtung 21c der Figur 4 weist insbesondere eine Recheneinheit 231, einen Programm- und Datenspeicher (nicht gezeigt), sowie beispielsweise eine oder mehrere Schnittstellen auf. Der Programm- und Datenspeicher und/oder die Recheneinheit 231 und/oder die Schnittstellen können in einer Baueinheit und/oder verteilt auf mehrere Baueinheiten ausgebildet sein.

Die Schnittstellen umfassen beispielsweise Versorgungsanschlüsse 241, 242 zur Spannungsversorgung der Slavesteuervorrichtung 21c.

Die Schnittstellen umfassen beispielsweise des Weiteren einen oder mehrere Busanschlüsse 243, 244 zur Kommunikation mit der Mastersteuervorrichtung 1.

Die Schnittstellen umfassen beispielsweise mehrere Anschlüsse zur Ansteuerung einer Matrix von LED-Lichtquellen 251, 252, die durch die Vielzahl von Linien symbolisiert wird.

Die Schnittstellen umfassen beispielsweise einen oder mehrere Anschlüsse von Thermistoren 271, 272, 273.

Die Slavesteuervorrichtung kann auch dazu ausgebildet sein (nicht gezeigt), eine beliebige Applikationssoftware auszuführen zum Ansteuern einer beliebigen Scheinwerfer-Systemkomponente.

Die Beleuchtungseinrichtung kann auch mehrere Slavesteuervorrichtungen 21a aufweisen, die dazu ausgebildet sind, eine Applikationssoftware auszuführen zum Ansteuern eines Laser-Fahrzeugscheinwerfers und/oder mehrere Slavesteuervorrichtungen 21b, die dazu ausgebildet sind, eine Applikationssoftware auszuführen zum Ansteuern eines LED-Fahrzeugscheinwerfers und/oder mehrere Slavesteuervorrichtungen 21c, die dazu ausgebildet sind, eine Applikationssoftware auszuführen zum Ansteuern eines Matrix-Fahrzeugscheinwerfers.

### Bezugszeichenliste

- 1: Mastersteuervorrichtung
- 11: Kommunikationsschnittstelle
- 13: Versorgungsschnittstelle
- 15: Bus-System
- 17: Spannungsversorgung
- 20: Scheinwerfergehäuse
- 21a, 21b, 21c: Slavesteuervorrichtungen
- 23a, 23b, 23c: Scheinwerfer-Systemkomponente
- 31: Recheneinheit
- 41, 42: Versorgungsanschlüsse
- 43, 44: Busanschlüsse
- 51: Lichtquelle
- 61, 62, 63: Sensoren
- 71, 72, 73: Thermistoren
- 131: Recheneinheit
- 141, 142: Versorgungsanschlüsse
- 143, 144: Busanschlüsse
- 151, 152: Lichtquellen
- 171, 172,: Thermistoren
- 231: Recheneinheit
- 241, 242: Versorgungsanschlüsse
- 243, 244: Busanschlüsse
- 251, 252: Lichtquellen
- 271, 272: Thermistoren

## Patentansprüche

1. Beleuchtungseinrichtung eines Fahrzeugs aufweisend eine Mastersteuervorrichtung (1), mindestens eine Slavesteuervorrichtung (21a, 21b, 21c) und ein Scheinwerfergehäuse (20), wobei die Slavesteuervorrichtung (21a, 21b, 21c) über ein Bus-System (15) mit der Mastersteuervorrichtung (1) verbunden ist, wobei
- die Slavesteuervorrichtung (21a, 21b, 21c) dazu ausgebildet ist, eine Applikationssoftware auszuführen zum Ansteuern einer Scheinwerfer-Systemkomponente (23a, 23b, 23c)
- die Slavesteuervorrichtung (21a, 21b, 21c) und die Scheinwerfer-Systemkomponente (23a, 23b, 23c) in dem Scheinwerfergehäuse (20) angeordnet sind und die Mastersteuervorrichtung (1) außerhalb des Scheinwerfergehäuses (20) angeordnet ist, **dadurch gekennzeichnet, dass**
- die Mastersteuervorrichtung (1) dazu ausgebildet ist, die Applikationssoftware auf die Slavesteuervorrichtung (21a, 21b, 21c) aufzuspielen.

2. Beleuchtungseinrichtung nach Anspruch 1, wobei die Mastersteuervorrichtung (1) dazu ausgebildet ist, die Slavesteuervorrichtung (21a, 21b, 21c) anzusteuern und/oder zu diagnostizieren.

3. Beleuchtungseinrichtung nach einem der vorhergehenden Ansprüche, wobei die Slavesteuervorrichtung (21a, 21b, 21c) dazu ausgebildet ist, eine Applikationssoftware auszuführen zum Ansteuern eines LED-Fahrzeugscheinwerfers.

4. Beleuchtungseinrichtung nach einem der vorhergehenden Ansprüche, wobei die Slavesteuervorrichtung (21a, 21b, 21c) dazu ausgebildet ist, eine Applikationssoftware auszuführen zum Ansteuern eines Laser-Fahrzeugscheinwerfers.

5. Beleuchtungseinrichtung nach einem der vorhergehenden Ansprüche, wobei die Slavesteuervorrichtung dazu ausgebildet ist, eine beliebige Applikationssoftware auszuführen zum Ansteuern einer beliebigen Scheinwerfer-Systemkomponente.

6. Beleuchtungseinrichtung nach einem der vorhergehenden Ansprüche, wobei die Slavesteuervorrichtung (21a, 21b, 21c) dazu ausgebildet ist, eine Applikationssoftware auszuführen zum Ansteuern eines Matrix-Fahrzeugscheinwerfers.

7. Beleuchtungseinrichtung nach einem der vorhergehenden Ansprüche, wobei die Mastersteuervorrichtung (1) eine Frontscheinwerfermastersteuervorrichtung ist oder eine Heckscheinwerfermastersteuervorrichtung.

8. Beleuchtungseinrichtung nach einem der vorhergehenden Ansprüche, wobei die Mastersteuervorrichtung (1) dazu ausgebildet ist, zum Aufspielen der Applikationssoftware auf die Slavesteuervorrichtung (21a, 21b, 21c) einen Flash-Speicher eines BIOS der Slavesteuervorrichtung (21a, 21b, 21c) mit einer Firmware zu überschreiben.

9. Beleuchtungseinrichtung nach einem der vorhergehenden Ansprüche, wobei die Mastersteuervorrichtung (1) dazu ausgebildet ist eine Fehlerdiagnose der Slavesteuervorrichtung (21a, 21b, 21c) auszuführen.

10. Beleuchtungseinrichtung nach einem der vorhergehenden Ansprüche aufweisend mehrere Slavesteuervorrichtungen (21a, 21b, 21c), wobei die Mastersteuervorrichtung (1) dazu ausgebildet ist die Applikationssoftware parallel auf die Slavesteuervorrichtungen (21a, 21b, 21c) aufzuspielen und/oder die Slavesteuervorrichtungen (21a, 21b, 21c) parallel anzusteuern und/oder parallel zu diagnostizieren.

11. Beleuchtungseinrichtung nach einem der vorhergehenden Ansprüche, wobei die Mastersteuervorrichtung (1) dazu ausgebildet ist mit einer externen Diagnosevorrichtung zu kommunizieren.

## Claims

1. Lighting device of a vehicle comprising a master control device (1), at least one slave control device (21a, 21b, 21c) and a headlamp housing (20), wherein the slave control device (21a, 21b, 21c) is connected to the master control device (1) via a bus system (15), wherein
- the slave control device (21a, 21b, 21c) is designed to execute application software for controlling a headlamp system component (23a, 23b, 23c)
- the slave control device (21a, 21b, 21c) and the headlamp system component (23a, 23b, 23c) are arranged in the headlamp housing (20) and the master control device (1) is arranged outside the headlamp housing (20), **characterized in that**
- the master control device (1) is designed to upload the application software to the slave control device (21a, 21b, 21c).

2. Lighting device according to claim 1, wherein the master control device (1) is designed to control and/or diagnose the slave control device (21a, 21b, 21c).

3. Lighting device according to any one of the preceding claims, wherein the slave control device (21a, 21b, 21c) is designed to execute application software for controlling an LED vehicle headlamp.

4. Lighting device according to any one of the preceding claims, wherein the slave control device (21a, 21b, 21c) is designed to execute application software for controlling a laser vehicle headlamp.

5. Lighting device according to any one of the preceding claims, wherein the slave control device is designed to execute any application software for controlling any headlamp system component.

6. Lighting device according to any one of the preceding claims, wherein the slave control device (21a, 21b, 21c) is designed to execute application software for controlling a matrix vehicle headlamp.

7. Lighting device according to any one of the preceding claims, wherein the master control device (1) is a front headlamp master control device or a rear headlamp master control device.

8. Lighting device according to any one of the preceding claims, wherein the master control device (1) is designed to overwrite a flash memory of a BIOS of the slave control device (21a, 21b, 21c) with firmware for uploading the application software to the slave control device (21a, 21b, 21c).

9. Lighting device according to any one of the preceding claims, wherein the master control device (1) is designed to perform error diagnosis of the slave control device (21a, 21b, 21c).

10. Lighting device according to any one of the preceding claims comprising multiple slave control devices (21a, 21b, 21c), wherein the master control device (1) is designed to upload the application software in parallel to the slave control devices (21a, 21b, 21c) and/or to control the slave control devices (21a, 21b, 21c) in parallel and/or to diagnose them in parallel.

11. Lighting device according to any one of the preceding claims, wherein the master control device (1) is designed to communicate with an external diagnostic device.

## Revendications

1. Dispositif d'éclairage d'un véhicule comprenant un dispositif de commande maître (1), au moins un dispositif de commande esclave (21a, 21b, 21c) et un boîtier de phare (20), le dispositif de commande esclave (21a, 21b, 21c) étant relié au dispositif de commande maître (1) par l'intermédiaire d'un système de bus (15), dans lequel
- le dispositif de commande esclave (21a, 21b, 21c) est conçu pour exécuter un logiciel d'application permettant de commander un composant de système de phare (23a, 23b, 23c)
- le dispositif de commande esclave (21a, 21b, 21c) et le composant de système de phare (23a, 23b, 23c) sont disposés dans le boîtier de phare (20) et le dispositif de commande maître (1) est disposé à l'extérieur du boîtier de phare (20), **caractérisé en ce que**
- le dispositif de commande maître (1) est conçu pour télécharger le logiciel d'application sur le dispositif de commande esclave (21a, 21b, 21c).

2. Dispositif d'éclairage selon la revendication 1, dans lequel le dispositif de commande maître (1) est conçu pour commander et/ou diagnostiquer le dispositif de commande esclave (21a, 21b, 21c).

3. Dispositif d'éclairage selon l'une quelconque des revendications précédentes, dans lequel le dispositif de commande esclave (21a, 21b, 21c) est conçu pour exécuter un logiciel d'application permettant de commander un phare de véhicule à LED.

4. Dispositif d'éclairage selon l'une quelconque des revendications précédentes, dans lequel le dispositif de commande esclave (21a, 21b, 21c) est conçu pour exécuter un logiciel d'application permettant de commander un phare de véhicule à laser.

5. Dispositif d'éclairage selon l'une quelconque des revendications précédentes, dans lequel le dispositif de commande esclave est conçu pour exécuter n'importe quel logiciel d'application permettant de commander n'importe quel composant de système de phare.

6. Dispositif d'éclairage selon l'une quelconque des revendications précédentes, dans lequel le dispositif de commande esclave (21a, 21b, 21c) est conçu pour exécuter un logiciel d'application permettant de commander un phare de véhicule à matrice.

7. Dispositif d'éclairage selon l'une quelconque des revendications précédentes, dans lequel le dispositif de commande maître (1) est un dispositif de commande maître pour phare avant ou un dispositif de commande maître pour phare arrière.

8. Dispositif d'éclairage selon l'une quelconque des revendications précédentes, dans lequel le dispositif de commande maître (1) est conçu pour écraser une mémoire flash d'un BIOS du dispositif de commande esclave (21a, 21b, 21c) avec un micrologiciel pour télécharger le logiciel d'application sur le dispositif de commande esclave (21a, 21b, 21c).

9. Dispositif d'éclairage selon l'une quelconque des revendications précédentes, dans lequel le dispositif de commande maître (1) est conçu pour effectuer un diagnostic d'erreur du dispositif de commande esclave (21a, 21b, 21c).

10. Dispositif d'éclairage selon l'une quelconque des revendications précédentes comprenant plusieurs dispositifs de commande esclave (21a, 21b, 21c), dans lequel le dispositif de commande maître (1) est conçu pour télécharger le logiciel d'application en parallèle sur les dispositifs de commande esclave (21a, 21b, 21c) et/ou pour commander les dispositifs de commande esclave (21a, 21b, 21c) en parallèle et/ou pour les diagnostiquer en parallèle.

11. Dispositif d'éclairage selon l'une quelconque des revendications précédentes, dans lequel le dispositif de commande maître (1) est conçu pour communiquer avec un dispositif de diagnostic externe.
